# EUROPEAN PATENT APPLICATION

(11) **EP 1 924 087 A2**
(43) Date of publication of application: **21.05.2008**
(21) Application number: 07111724.6
(22) Date of filing: 04.07.2007
(51) Int. Cl.: H04N 5/44

(54) **Image device and still image capturing method thereof**

(30) Priority: 15.11.2006 KR 20060112884
(71) Applicant: SAMSUNG ELECTRONICS CO., LTD., Suwon-si, Gyeonggi-do (KR)
(72) Inventor: KWON, Hyok-sang, 101, Dream Ville, 207-19, Maetan 4-dong, Gyeonggi-do (KR)
(74) Representative: Robinson, Ian Michael

(57) **Abstract**

An image device and a still image capturing method thereof. The image device includes a first storage unit (23) which stores a broadcast stream by a certain length; a capturer (25) which, when a capture function is selected to output at least one of frames constituting the broadcast stream as a still image, captures a certain number of frames starting from a frame at a certain time ahead of the capture function selection among the frames stored to the first storage; and a second storage unit (29) which stores the frames captured at the capturer (25). Accordingly, the user's convenience can be promoted by capturing the user's intended still image.

## Description

Methods and apparatuses consistent with the present invention relate to an image device and a still image capturing method thereof, and more particularly, to an image device which enables a user to capture an intended still image by capturing a broadcast stream at a certain time before a capture function is selected, and a still image capturing method of the image device.

With advances of digital technology, image devices are changing from the analog system to the digital system. Conventional analog image devices have simply displayed image signals, whereas digital image devices provide various functions.

One of the digital image device functions is to capture a displayed screen. As watching the image signal, when an intended screen is displayed, a user can capture the intended screen by selecting the capture function using an input unit such as a remote controller. The user may use the captured image as a background on an image device or personal computer screen, or print the captured image.

However, while the user finds his/her intended screen and selects the capture function using a remote controller, the intended screen passes away. As for a still video, the user can acquire a still image similar to the intended screen. Yet, as for a moving picture, the user may capture a completely different still image other than the intended screen.

Therefore, what is needed is a method to enable the user to capture his/her intended screen upon selecting the capture function.

According to the present invention there is provided an apparatus and method as set forth in the appended claims. Preferred features of the invention will be apparent from the dependent claims, and the description which follows.

An aspect of the present invention has been provided to solve the above-mentioned and/or other problems and an aspect of the present invention provides an image device which enables a user to capture his/her intended still image by capturing a broadcast stream at a certain time before a capture function is selected, and a still image capturing method of the image device.

According to an aspect of the present invention, an image device includes a first storage unit which stores a broadcast stream by a certain length; a capturer which, when a capture function is selected to output at least one of frames constituting the broadcast stream as a still image, captures a certain number of frames starting from a frame at a certain time ahead of the capture function selection among the frames stored to the first storage; and a second storage unit which stores the frames captured at the capturer.

The image device may further include an intra picture (I-picture) selector which extracts only I-pictures from the broadcast stream.

The first storage unit may be a temporary memory which temporarily stores a certain number of frames of the received broadcast stream;

The temporary memory may store the I-pictures selected at the I-picture selector.

The first storage unit may be a main memory which stores the received broadcast stream over a certain time period, and the broadcast stream stored to the first storage unit may be displayed on a display unit when it is selected to be reproduced.

The capturer may capture the broadcast stream when the capture function is selected while reproducing the broadcast stream stored to the main memory, and the I-picture selector may select I-pictures from the broadcast stream.

The image device may further include a file converter which converts the I-pictures fed from the I-picture selector into image files.

The second storage unit may be a capture memory which stores the image files converted at the file converter.

The image device may further include a third storage unit which stores an image file selected by a user from the image files stored to the second storage unit.

According to the above aspect of the present invention, a still image capturing method of an image device, includes storing a broadcast stream by a certain length; selecting a capture function to output at least one of frames constituting the broadcast stream as a still image; capturing a certain number of frames starting from a frame at a certain time before the capture function is selected among the stored frames; and storing the captured frames.

These and/or other aspects of the present invention will become apparent and more readily appreciated from the following description of the exemplary embodiments, taken in conjunction with the accompanying drawings of which:
FIG. 1 is a block diagram of a related art image device;
FIG. 2 is a schematic block diagram of a capture processing block of FIG. 1 of the related art;
FIG. 3 is a block diagram of a capture processing block according to one exemplary embodiment of the present invention;
FIG. 4 is a block diagram of a capture processing block according to another exemplary embodiment of the present invention;
FIG. 5 depicts I-pictures captured by the capture processing block according to one exemplary embodiment of the present invention;
FIG. 6 is a flowchart outlining the I-picture capturing of FIG. 5; and
FIG. 7 is a flowchart outlining the I-picture capturing at the capture processing block according to another exemplary embodiment of the present invention.

Reference will now be made in detail to the exemplary embodiments of the present invention, examples of which are illustrated in the accompanying drawings, wherein like reference numerals refer to the like elements throughout. The exemplary embodiments are described below to explain the present invention by referring to the figures.

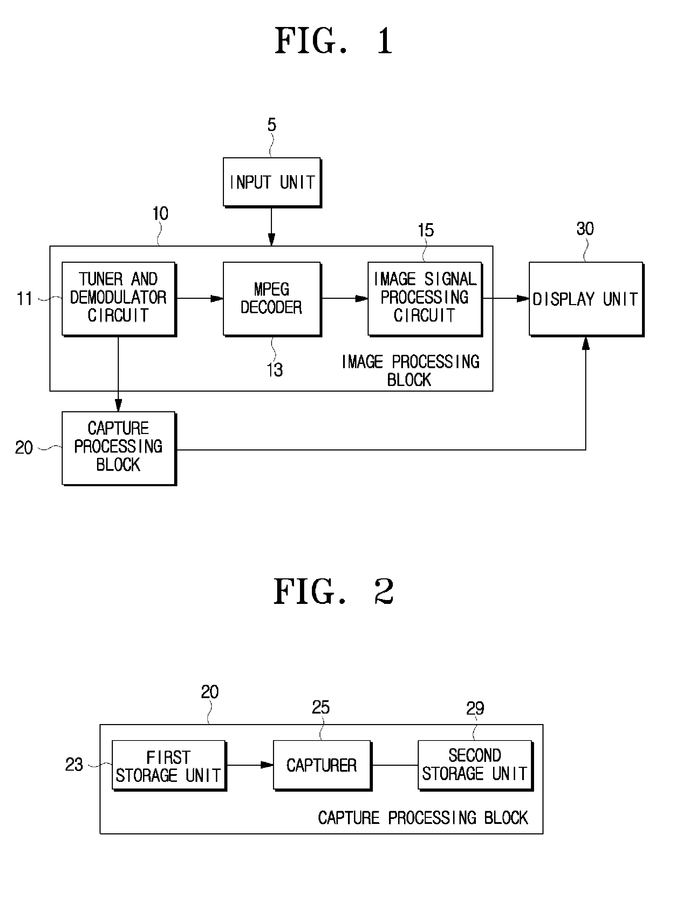

FIG. 1 is a block diagram of a related art image device.

The related art image device includes an input unit 5, an image processing block 10, a capture processing block 20, and a display unit 30.

The input unit 5 is formed as an operation panel integrally formed with the image device or a remote controller. The input unit 5 has a capture button for selecting a capture function.

The image processing block 10 include a tuner and demodulator circuit 11, a Moving Picture Experts Group (MPEG) decoder 13, and an image signal processing circuit 15.

The tuner and demodulator circuit 11 receives a digital broadcast signal of an intended channel from digital broadcast signals provided via a terrestrial relay station or a satellite, converts the received digital broadcast signal to an intermediate frequency, and demodulates to a broadcast signal by demodulating and error-correcting the digital broadcast signal of the intermediate frequency.

The MPEG decoder 13 restores the original image data before the compression and the coding from the broadcast stream fed from the tuner and demodulator circuit 11, and provides the restored image data to the image signal processing circuit 15.

The image signal processing circuit 15 converts the image data fed from the MPEG decoder 13 to an analog image signal of National TV Standards Committee (NTSC) or Phase Alternating Line (PAL) format, and provides the converted analog image signal to the display unit 30.

FIG. 2 is a schematic block diagram of the capture processing block of FIG. 1. In FIG. 2, the capture processing block 20 includes a first storage unit 23, a second storage unit 29 and a capturing unit 25.

The first storage unit 23 stores frames of a certain length from the broadcast stream. The second storage unit 29 stores frames selected according to the capture function. When the capture function is selected, the capturing unit 25 captures frames from a certain time ahead of the point when the capture function is selected among the frames stored to the first storage unit 23, and then saves the captured frames to the second storage unit 29.

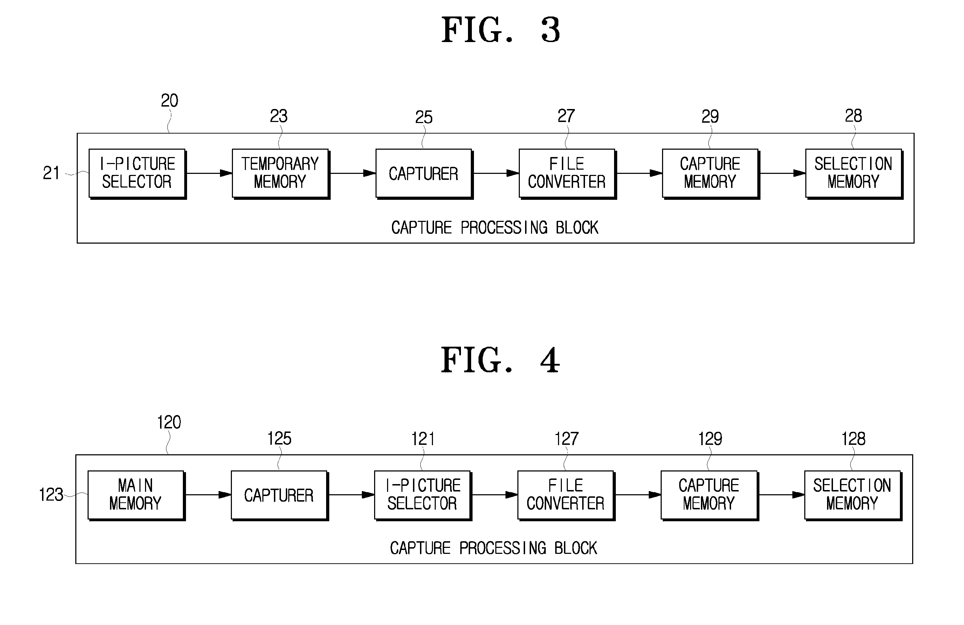

FIG. 3 is a block diagram of a capture processing block according to one exemplary embodiment of the present invention.

In FIG. 3, the capture processing block 20 includes an intra picture (I-picture) selector 21, a temporary memory 23, a capture memory 29, a capturer 25, a file converter 27, and a selection memory 28 which is a third storage unit. The capture processing block 20 serves to perform the capture function to output the broadcast stream as the still image. Herein, the temporary memory 23 refers to the first storage unit 23 of FIG. 2 and the capture memory 29 refers to the second storage unit 29 of FIG. 2, and thus they will use the same reference numbers.

The I-picture selector 21 receives the broadcast stream from the tuner and demodulator circuit 11 and extracts only I-pictures from the broadcast stream. Typically, since merely one frame cannot make a complete screen, the broadcast stream is split to group of pictures (GOP) units. Each GOP includes an I-picture, a predictive picture (P-picture), and a bidirectional predictive picture (B-picture). The I-picture contains image information indicative of one image and is independent of preceding and/or following picture. The P-picture contains forward predictive coded image information of the I-picture. The B-picture contains bidirectional predictive coded image information. The I-picture selector 21 captures only I-pictures from the GOP and provides the captured I-pictures to the temporary memory 23. The I-picture selector 21 can determine whether each frame is the I-picture based on information contained in each frame of the broadcast stream.

The temporary memory 23 temporarily saves only the I-pictures of the respective GOPs, which are selected at the I-picture selector 21, over a certain time. The temporary memory 23, which is a first in first out (FIFO) memory, removes the oldest I-picture every time a new I-picture is saved. The temporary memory 23 stores frames of a broadcast stream which might be missed out while the user is watching the intended screen to capture and selecting the capture function. Accordingly, the capacity of the temporary memory 23 only has to cover several to tens of seconds at the shortest or several minutes at the longest. The temporary memory 23 can employ a flash memory or a hard disk drive (HDD).

When the capture function is selected, the capturer 25 captures a certain number of I-pictures before a certain time from the moment when the capture function is selected, in the broadcast stream stored to the temporary memory 23. The capturer 25 captures the certain number of the pictures before the certain time in order to capture the screen that might be missed out by the user during a delay time by taking into account the delay time taken to press the capture button upon finding the intended screen while watching the broadcast. Since the broadcast stream contains 25 ~ 100 frames per second, the number of the captured I-pictures is adjustable according to a preset delay time.

The file converter 27 converts the I-pictures captured at the capturer 25 into image files. The file converter 27 can convert the I-pictures into various image files such as TIF files and JPG files.

The capture memory 29 stores the I-pictures which are converted to the image files at the file converter 27. The image files saved in the capture memory 29 are displayed in the display unit 30 according to a user's request. The user can display the image files stored to the capture memory 29 and select his/her intended image file.

The selection memory 29 stores the image file selected by the user, among the image files displayed in the display unit 30.

While the capture memory 29, the temporary memory 23, and the selection memory 28 are separately provided in this exemplary embodiment, they can be configured as a single memory.

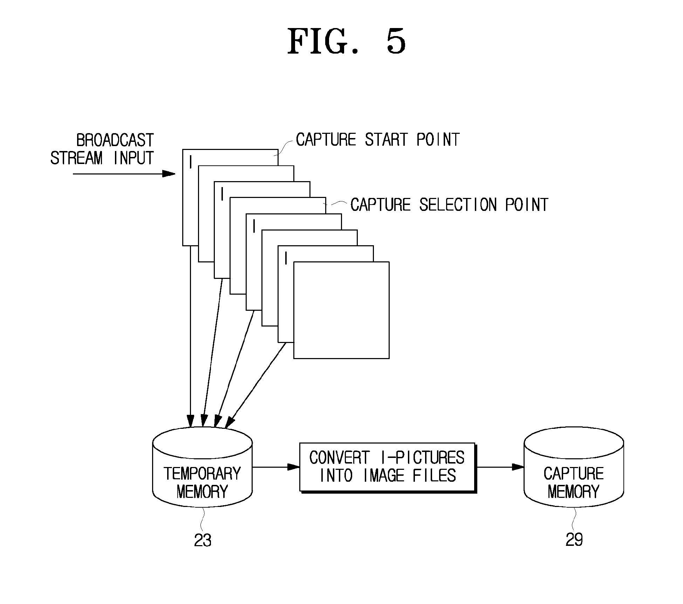

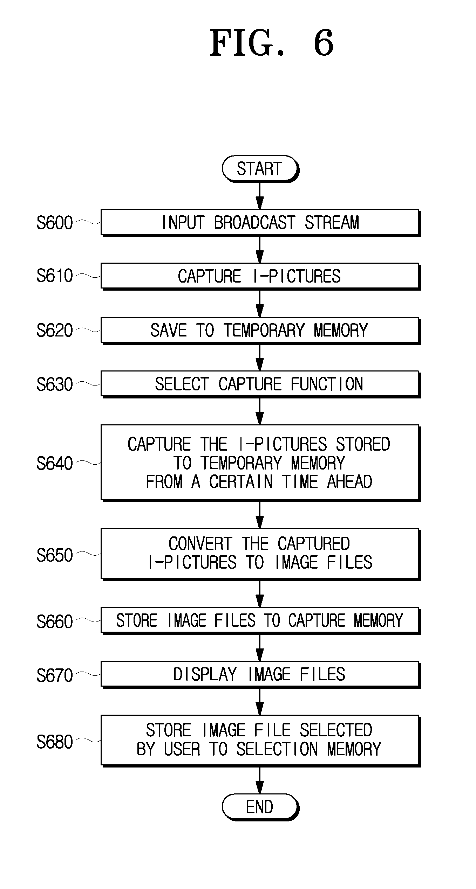

FIG. 5 depicts I-pictures captured by the capture processing block according to one exemplary embodiment of the present invention, and FIG. 6 is a flowchart outlining the I-picture capturing of FIG. 5.

The broadcast stream processed at the tuner and demodulator circuit 11 is fed to the capture processing block 20 (S600). The I-picture selector 21 extracts only I-pictures from the fed broadcast stream (S610). The extracted I-pictures are temporarily saved to the temporary memory 23 (S620).

When the user selects the capture function (S630), the capturer 25 captures I-pictures starting from the I-picture at a certain time ahead of the moment when the user selects the capture function among the I-pictures stored to the temporary memory 23 over a preset time period or until the user stops the capture function as shown in FIG. 5 (S640). In FIG. 5, the superimposed squares indicate the frames where the first stored frame is arranged in rear and the last stored frame is arranged in front. That is, the frame at the capturing start point is stored prior to the frame at the capture selection point.

The captured I-pictures are fed to the file converter 27 and converted into image files (S650). The image files are stored to the capture memory 29 (S660). The image files stored to the capture memory 29 can be automatically displayed in the display unit 30 when the capturing process is completed, or be displayed in the display unit 30 when the user wants to display the captured image files (S670). The user selects his/her intended image file from the image files displayed in the display unit 30 and the selected image file is saved in the selection memory 28 (S680).

FIG. 4 is a block diagram of a capture processing block according to another exemplary embodiment of the present invention.

In FIG. 4, the capture processing block 120 includes a main memory 123, a capturer 125, an I-picture selector 121, a capture memory 129, a filer converter 127, and a selection memory 128.

The main memory 123 stores a broadcast stream according to the execution of broadcast stream recording function, Digital Television (DTV) time-shift function, and Personal Video Recorder (PVR) bookmark function by the user. The stored broadcast stream can be replayed according to a user's selection. The main memory 123 may employ a Hard Disk Drive (HDD) or a flash memory.

When the capture function is selected, the capturer 125 captures the broadcast stream, which is stored to the main memory 123, from a certain time point ahead of the moment when the capture function is selected over a certain time period.

The I-picture selector 121 extracts I-pictures from the broadcast stream captured at the capturer 125 and provides the extracted I-pictures to the file converter 127. The I-picture selector 121 determines whether the picture is the I-picture using information contained in the frames of the broadcast stream.

The file converter 127 converts the I-pictures into image files and stores the image files to the capture memory 129. The selection memory 128 only saves the image file selected by the user.

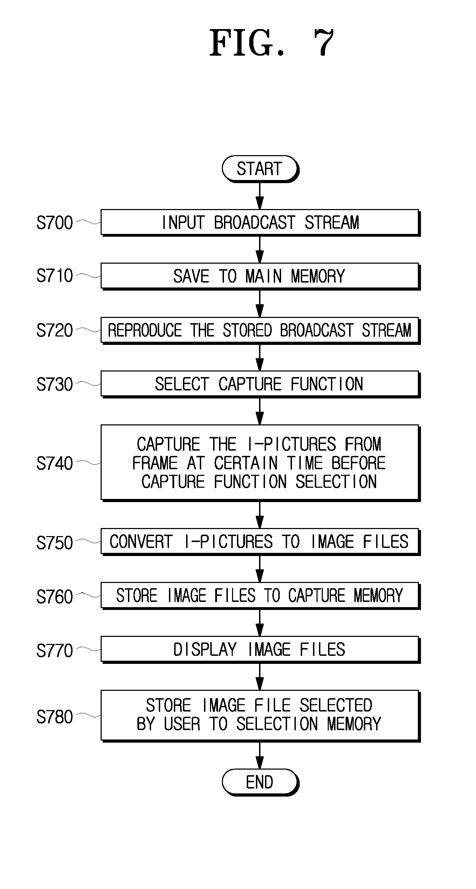

FIG. 7 is a flowchart outlining the I-picture capturing at the capture processing block according to another exemplary embodiment of the present invention.

When a broadcast stream is input (S700), the broadcast stream is stored to the main memory 123 according to the user's selection or a preset function (S710). When the user selects to replay the saved broadcast stream, the broadcast stream stored to the main memory 123 is processed through the MPEG decoder 13 and the image signal processing circuit 15 and then displayed in the display unit 30 (S720). When the user selects the capture function (S730) during the reproduction of the broadcast stream stored to the main memory 123, the capturer 25 captures the broadcast stream stored to the main memory 123, starting from the frame at a certain time point before the moment when the capture function is selected. The captured broadcast stream is provided to the I-picture selector 121, and the I-picture selector 121 extracts I-pictures from the broadcast stream (S740) The extracted I-pictures are converted into the image files at the file converter 127 (S750) and stored to the capture memory 129 (S760). The image files stored to the capture memory 129 may be automatically displayed in the display unit 30 upon the completion of the capturing process, or displayed in the display unit 30 when the user wants to display the captured images (S770). From the image files displayed in the display unit 30, the user selects his/her intended image file and the selected image file is stored to the selection memory 128 (S780).

As such, when the user chooses the capture function, the image device captures the I-pictures at a certain time ahead of the moment when the capture function is selected and provides the captured I-pictures to the user so that the user can capture his/her intended screen without missing it. Thus, the user's convenience can be considered.

While the I-pictures are extracted and captured from the broadcast stream, it is possible to capture P-pictures, or I-pictures and P-pictures together.

While the I-pictures are captured over the preset time period when the capture function is selected, the user can select the capture start and the capture end using the capture button.

Upon the selection of the capture function, while the image device captures the displayed I-pictures ahead of the I-picture at the selection time of the capture start, the user can capture the I-pictures merely from the capture start point to the capture end point.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image device comprising:
a first storage unit (23) which stores a broadcast stream by a certain length;
a capturer (25) which, when a capture function is selected to output at least one of frames constituting the broadcast stream as a still image, captures a certain number of frames starting from a frame at a certain time ahead of the capture function selection among the frames stored to the first storage unit (23); and
a second storage unit (29) which stores the frames captured at the capturer (25).

2. The image device of claim 1, further comprising:
an intra picture (I-picture) selector (21) which extracts only I-pictures from the broadcast stream.

3. The image device of claim 2, wherein the first storage unit (23) is a temporary memory which temporarily stores a certain number of frames of the received broadcast stream.

4. The image device of claim 3, wherein the temporary memory (23) stores the I-pictures selected at the I-picture selector (21).

5. The image device of claim 1, wherein the first storage unit (23) is a main memory which stores the received broadcast stream over a certain time period, and the broadcast stream stored to the first storage unit (23) is displayed on a display unit (30) when it is selected to be reproduced.

6. The image device of claim 5, wherein the capturer (25) captures the broadcast stream when the capture function is selected while reproducing the broadcast stream stored to the main memory, and
the I-picture selector (21) selects I-pictures from the broadcast stream.

7. The image device of claim 6, further comprising:
a file converter (27) which converts the I-pictures fed from the I-picture selector (21) into image files.

8. The image device of claim 7, wherein the second storage unit (29) is a capture memory which stores the image files converted at the file converter (27).

9. The image device of claim 8, further comprising:
a third storage unit (28) which stores an image file selected by a user from the image files stored to the second storage unit (29).

10. A still image capturing method of an image device, the method comprising:
storing a broadcast stream by a certain length;
selecting a capture function to output at least one of frames constituting the broadcast stream as a still image;
capturing a certain number of frames starting from a frame at a certain time before the capture function is selected among the stored frames; and
storing the captured frames.

11. The still image capturing method of claim 10, wherein the storing of the broadcast stream by the certain length captures and temporarily stores only intra pictures (I-pictures) from the received broadcast stream.

12. The still image capturing method of claim 10, wherein the storing of the broadcast stream by the certain length stores the received broadcast stream over a certain time period.

13. The still image capturing method of claim 12, further comprising:
reproducing the broadcast stream stored over the certain time period; and
selecting I-pictures from the captured broadcast stream when the capture function is selected and the broadcast stream is captured.

14. The still image capturing method of claim 11, further comprising:
converting the I-pictures into image files when the capture function is selected.

15. The still image capturing method of claim 14, further comprising:
storing the converted image files.

16. The still image capturing method of claim 15, further comprising:
selecting an intended image file by a user from the image files; and
storing the selected image file.
